Europäisches Patentamt

(19) European Patent Office

Office européen des brevets

(11) Publication number: **0 104 095**
**A1**

(12) **EUROPEAN PATENT APPLICATION**

(21) Application number: **83305606.2**

(22) Date of filing: **21.09.83**

(51) Int. Cl.³: **B 60 T 15/06**

(30) Priority: **22.09.82 GB 8227094**

(43) Date of publication of application:
**28.03.84 Bulletin 84/13**

(84) Designated Contracting States:
**AT BE CH DE FR GB IT LI NL SE**

(71) Applicant: **BENDIX LIMITED**
**Douglas Road**
**Kingswood, Bristol BS15 2NL(GB)**

(72) Inventor: **Storer, George Alexander Edward**
**12a High Street**
**Warmley Bristol BS15 4NE(GB)**

(74) Representative: **Turner, Alan Reginald**
**BENDIX LIMITED Douglas Road**
**Kingswood, Bristol BS15 2NL(GB)**

(54) **Improvement to fluid pressure valve assemblies with moulded pistons.**

(57) An air pressure hand operable control valve of the self-lapping type has a doulle valve (10) with an inlet valve seat (13) contained within a piston (11) which has respective 'O' rings slideable in a bore of a valve housing (1) and the piston is formed of a pair of mutually engaging moulded plastics components 21 and 23 which can be adoped to snap together to afford cheapness and comparative ease of assembly.

Croydon Printing Company Ltd.

*Fig.1*

Improvement to Fluid Pressure Valve Assemblies with
moulded pistons.

- 1 -

This invention relates to fluid pressure valve assemblies
with moulded pistons.

It has been proposed to construct fluid pressure valve
assemblies with pistons made by plastics moulding
techniques such as injection moulding but in the case of
pistons which are designed with re-entrant surface
characteristics the design of moulds is invariably
such as to present the risk of flash-lines in crucial
places.  In the case of an 0-ring groove two flash
lines or ridges are likely to result in the base of the
groove and if they exceed a certain tolerance magnitude
failure carefully to remove same can result in component
leakage in operation.  In addition it may still be
necessary to perform additional machining operations on
such components where internal grooves or the like are
required for the retention of internal components such
as circlips.

The present invention seeks to improve upon such a valve
assembly by moulding the piston to have two parts which
are snapped or bonded together.

The present invention therefore provides a fluid pressure
valve assembly including a housing a double valve member
carried within a moveable pressure responsive member
one side thereof being subject to pressure at a fluid pressure delivery port in a sense to tend to produce movement in a direction to unseat the double valve member from an exhaust valve seat movement in the opposite sense tending to permit sealing of the valve member against the exhaust valve seat and to cause unseating of the valve member from an inlet valve seat cnaracterised by said pressure responsive member comprising two mutually inter-en gaging parts for enclosure of the valve member.

In order that the invention may be more clearly understood and readily carried into effect the same will be further described with reference to the accompanying drawings in which:

Fig. 1 illustrates a manually operable air control valve for a vehicle braking system and employing a moulded component according to the invention,

Fig. 2 illustrates on a larger scale and in broke-down sectional view the construction of a moulded component used in the valve of Fig. 1 and

Fig. 3 illustrates an alternative construction of a moulded component for use in the valve of Fig.1.

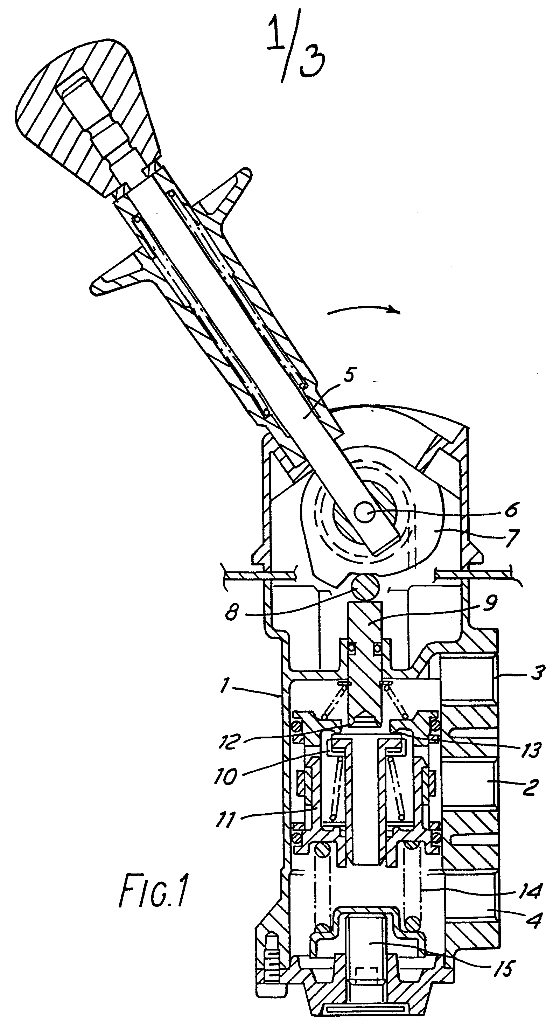

Referring to Fig. 1, the hand valve is of general type and application further technical description of which is to be found in Applicants' published Technical Pamphlet No. 6/007 in relation to compressed air vehicle braking systems. Briefly, the assemblies have a housing 1 a fluid pressure supply port 2, an output port 3 and a vent port 4.    The valve has a control lever 5 moveable in a vertical plane about an horizontal axis 6 to position a cam 7.    A cam follower 8 is urged against  the cam by a plunger 9 with a light biassing spring 16 thereby to position the plunger 9 according to the setting of a control handle 17.    The lower end of plunger 9 forms an exhaust seat 12 of a double valve having a sliding spring loaded valve member 10 carried together with its light spring 18 within a plastic  moulded piston 11 and within which an annular inlet valve seat 13 is integrally moulded.    The piston is itself urged upwards towards the cam by a spring 14 the force of which is adjustable by a set screw 15 in the lower end of the housing.    A necessary 'O' ring within which member 10 is sealingly slideable is retained by spring 18 and a washer 20.

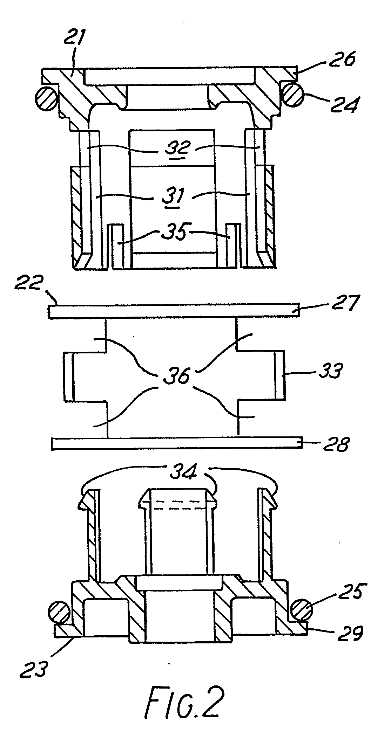

Referring now to the construction of the piston this component is to be seen to carry two O-rings and is comprised of three moulded parts 21, 22, 23 shown more clearly in broken-down form in Fig. 2 and designed so that they snap together to provide flash free retaining grooves for O-rings 24 and 25 bounded by pairs of flanges 26, 27 and 28, 29 respectively.    Each of the three parts is injection moulded of a "Delrin" fibre filled plastic material.

The uppermost part 21 carrying flange 25 has a skirt 30 of generally hollow cylindrical shape but it is provided with four equally spaced grooves 31 topped by retaining apertures 32. The inlet valve seat 13 is also integrally moulded in part 21.

The intermediate part 22 carrying flanges 27 and 28 has a generally cylindrical part 33 between the flanges and has an internal diameter to slidingly accept the skirt 30 of part 21.

The lower part 23 is complimentary to part 21 in that extending upwards from the flange 29 four hooked parts 34 are provided which are inwardly deflectable for sliding entry along grooves 31 of part 21 and so that the hooked ends are then able to snap into the apertures 32, thereby retaining the three parts together as one. Apertures 32 or 35 align with cutaway regions 36 to provide through flow of air from port 2 of the valve housing.

By providing the flanges 27 and 28 of the 0-ring grooves on a separate moulding the mouldings can be such that the bases of the grooves are entirely free of moulding flash lines.

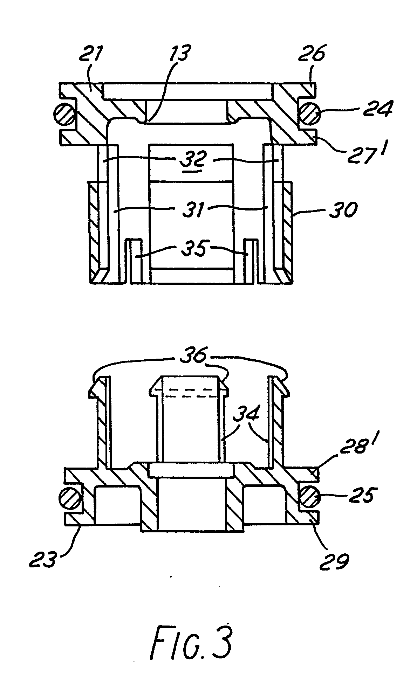

In an alternative construction for the piston, as shown in Fig. 3 if mouldings can be consistently produced wherein although flash lines are present in the 0-ring grooves, such flash lines are maintained within tolerance limits, they may be functionally acceptable. In that case the two inner flanges may be provided as at 27' and 28' on the upper and lower mouldings respectively and the intermediate moulding of Fig. 2 will no longer be Although specific snap-together assemblies are shown in Figs. 2 and 3, obviously variants are readily to be envisaged and in some cases adhesives may be preferred for joining the parts.

In operation of the valve assembly it is mounted in the driver's cab of a heavy road vehicle for controlling secondary brakes in accordance with the magnitude of the fluid (air) pressure delivered at port 3 from a reservoir connected at port 2. In the position shown in Fig. 1 the delivered pressure is zero. Upon movement of handle 17 and lever 5 in the direction of the arrow seat 12 is driven downwards by cam 7 to close off the exhaust valve and unseat the inlet valve 13. When the pressure above the piston attains a valve according to the cam position the piston is moved downward against spring 14 to permit reclosure of the inlet valve and the delivered pressure is stable at the thus set valve. Return of the handle against the direction of the arrow permits the exhaust valve seat 12 to unseat again venting the delivered pressure. Such a valve assembly may be used for upright or inverse brake control,

0104095

CLAIMS

1. A fluid pressure valve assembly including a housing (1) a double valve member (10) carried within a moveable pressure responsive member (11) one side thereof being subject to pressure at a fluid pressure delivery port (3) in a sense to tend to produce movement in a direction to unseat the double valve member from an exhaust valve seat (12) movement in the apposite sense tending to permit sealing of the valve member against the exhaust valve seat and to cause unseating of the valve member from an inlet valve seat (13) characterised by said pressure responsive member comprising two mutually interengaging parts (21, 23) for enclosure of the valve member.

2. A fluid pressure valve assembly as claimed in claim 1, characterised by said pressure responsive member comprising two snap-together parts (21, 23).

3. A fluid pressure valve assembly as claimed in claim 1 or 2 characterised by the flanges (26, 27') for one 'O' ring groove being provided on one said part and the flanges(28, 29) for another 'O' ring groove being provided on the other said part.

4. A fluid pressure valve assembly as claimed in claim 1 or 2 characterised by the outer flanges (26) of one 'O' ring groove being provided on one said part and the outer flange 29 another 'O' ring groove being provided on the other said port, a further part 22 being provided which is retained between the said two parts and which carries the inner flanges (27, 29) of the respective 'O' ring grooves.

5)    A fluid pressure valve as claimed in claims 2, 3 or 4 characterised by the inlet valve seat 13 of the double valve being moulded integrally within one said part (21).

6)    A fluid pressure valve as claimed in claims 1, 2, 3, 4 or 5 characterised by one said part having a skirt 30 of hollow cylindrical shape and provided with a plurality of spaced grooves (31) with retaining apertures 32 and the other said part having respective deflectable parts 34 slideable in said grooves and detracts (36) engageable in said apertures to retain said parts locked together.

7)    A fluid pressure valve as claimed in claim 5 characterised by said skirt (30) having further apertures (35) permitting free fluid flow from between the 'O' ring grooves and the interior of the piston.

8)    A fluid pressure valve as claimed in claims 1, 2, 3, 4, 5, 6 or 7 characterised by the first and second parts being moulded of a mouldable "DELRIN" fibre filled plastics material.

1/3

FIG.1

FIG.2

21  13  26
24
27'
32
31  30
35

36
34
28'
25
23  29

FIG. 3

European Patent
Office

**EUROPEAN SEARCH REPORT**

Application number

EP 83 30 5606

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 251 663 (CLAYTON DEWANDRE) <br> * Page 3, lines 3-15; figure 1 * <br> --- | 1,5 | B 60 T 15/06 |
| A | FR-A-2 223 223 (BENDIX) <br> * Page 3, lines 25-35; figure 1 * <br> --- | 1,3 | |
| A | DE-A-2 645 506 (BENDIX) <br> --- | | |
| A | US-A-3 212 825 (BUELER) <br> ----- | | |

| | |
|---|---|
| | TECHNICAL FIELDS SEARCHED (Int. Cl. ³) |
| | B 60 T 15/06 <br> B 60 T 15/04 <br> B 60 T 15/02 <br> B 60 T 15/08 |

The present search report has been drawn up for all claims

| Place of search | Date of completion of the search | Examiner |
|---|---|---|
| THE HAGUE | 17-12-1983 | HARTEVELD C.D.H. |